# FASCICULE DE BREVET EUROPEEN

(11) **EP 2 140 990 B1**
(45) Date de publication et mention de la délivrance du brevet: **08.08.2012**
(21) Numéro de dépôt: 09354030.0
(22) Date de dépôt: 30.06.2009
(51) Int. Cl.: B27L 7/06, A01G 23/099, B25D 1/02, B26B 23/00

(54) **Outil à tête de frappe interchangeable.**
Werkzeug mit auswechselbarem Schlagkopf
Tool with an interchangeable striking head

(30) Priorité: 04.07.2008 FR 0803800
(43) Date de publication de la demande: 06.01.2010
(73) Titulaire: Fiskars Brands France, 91140 Villebon sur Yvette (FR)
(72) Inventeur: Chaney, Jean-François, 38580 La Chapelle du Bard (FR)
(74) Mandataire: Hecké, Gérard

(56) Documents cités:
- EP-A- 0 182 174
- DE-C- 270 749
- DE-C- 633 270
- DE-C- 802 602
- DE-U1-202004 016 785
- FR-A3- 2 905 625
- US-A- 356 299
- US-A- 460 115
- US-A- 1 195 423
- US-A- 1 356 413
- US-A- 3 130 762
- US-A- 3 377 052
- US-A- 5 690 316
- US-A1- 2004 165 375

## Description

### Domaine technique de l'Invention

L'invention concerne un outil comprenant un corps et une tête de frappe réalisée en un matériau de dureté inférieure à l'acier, la tête de frappe étant formée par une pièce tampon interchangeable, rapportée sur un embout tronconique faisant saillie du corps, et entourée extérieurement par une bague métallique annulaire servant de frette et d'indicateur d'usure, ladite bague présentant une longueur axiale inférieure à celle de la tête de frappe, la différence de longueur correspondant à l'intervalle d'usure maximum de ladite tête.

### Etat de la technique

Le document US 356299 se rapporte à un maillet conforme au préambule de la revendication 1. Le maillet comporte un corps en bois, avec des têtes de frappe interchangeables lesquelles sont entourées chacune par une frette métallique fixe.

Pour la fente de bols, il est connu d'utiliser des coins métalliques en acier équipés de têtes de frappe ne générant pas d'éclats lors du choc créé par un merlin ou une masse. La matière anti-éclat de ces têtes de frappe connues est moins dure que l'acier, et peut être du bois, de l'aluminium ou du plastique. Une telle tête de frappe est décrite dans le document DE 270 749.

La surface supérieure du coin est généralement percée d'un trou dans lequel est insérée la matière anti-éclat. Pour limiter l'usure prématurée de cette matière, on a déjà proposé de positionner un anneau torique à un centimètre sous la surface de frappe pour diminuer l'effet d'éclatement suite aux chocs d'impact répétés. La durée de vie de ces coins connus reste néanmoins limitée, et il est nécessaire de remplacer régulièrement la matière tampon des têtes de frappe. Le document FR 2905625 concerne un accessoire pour des têtes d'outils de percussion. Il comporte une bague avec deux languettes, dans laquelle est fixé un insert en matériau amortisseur. L'insert est fixé par des clous, vis ou goupilles, dans le but de le remplacer en cas d'usure.

### Objet de l'invention

L'objet de l'invention consiste à réaliser un outil équipé d'une tête de frappe perfectionnée, à sécurité anti-éclat, facilement interchangeable, et ayant une durée de vie optimum.

L'outil selon l'invention présente les caractéristiques de la revendication 1.

Selon un mode de réalisation préférentiel, la longueur axiale de la bague métallique est supérieure à la hauteur de l'embout tronconique du corps, et le corps est équipé d'une butée située au niveau de l'interface avec l'embout pour servir d'organe d'appui à la pièce tampon, ainsi qu'à la bague métallique lorsque ladite pièce tampon se trouve dans l'état d'usure maximum.

L'outil peut être constitué par un coin pour la fente du bois, un merlin, une masse, ou tout autre outil de frappe.

### Description sommaire des dessins

D'autres avantages et caractéristiques ressortiront plus clairement de la description qui va suivre de plusieurs modes de réalisation de l'invention donnés à titre d'exemples non limitatifs et représentés aux dessins annexés, dans lesquels :
- la figure 1 est une vue en élévation du coin selon l'invention avec la tête de frappe illustrée en position assemblée sur l'embout du corps métallique;
- la figure 2 montre une vue de profil du coin de la figure 1 en position démontée de la tête de frappe;
- les figures 3 et 4 représentent des vues en coupe de la tête de frappe de la figure 1, respectivement dans l'état neuf avant utilisation, et dans l'état d'usure maximum nécessitant le remplacement ;
- la figure 5 est une vue en élévation d'une masse équipée d'une tête de frappe selon l'invention ;
- la figure 6 est une vue de profil de la figure 5 après démontage de la tête de frappe ;
- les figures 7 et 8 sont des vues identiques des figures 5 et 6 d'une autre variante relative à un merlin.

### Description d'un mode particulier de réalisation

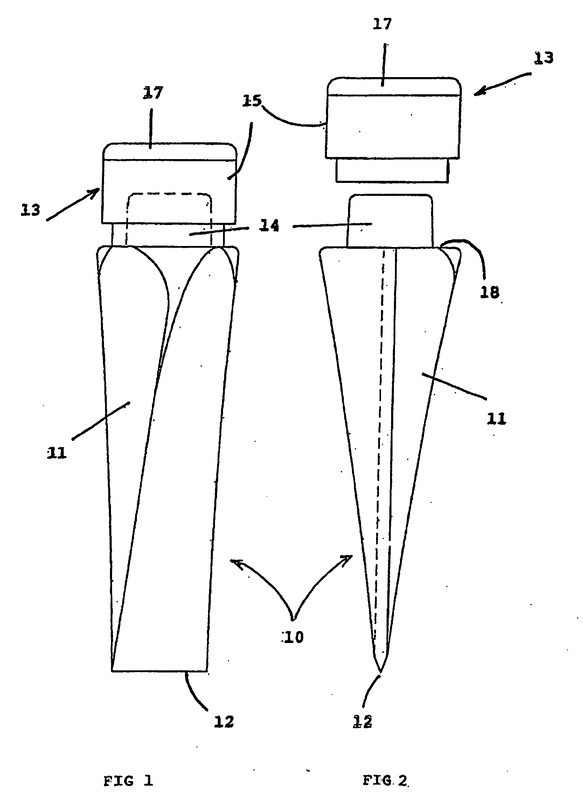

En référence aux figures 1 à 4, l'outil est constitué par un coin 10 pour fendre du bois, lequel comporte un corps 11 métallique, notamment en acier, et de forme sensiblement prismatique se terminant à l'extrémité inférieure par une arête de coupe 12 rectiligne.

A l'extrémité supérieure se trouve une tête de frappe 13 formée par une pièce tampon 17 interchangeable, laquelle est rapportée sur un embout 14 tronconique faisant saillie du corps 11 dans la direction axiale. La pièce tampon 17 sert à amortir le choc mécanique en provenance d'une masse ou d'un merlin, et est réalisée en un matériau plastique anti-éclat, ayant une dureté et une masse volumique inférieures à celles de l'acier du corps 11.

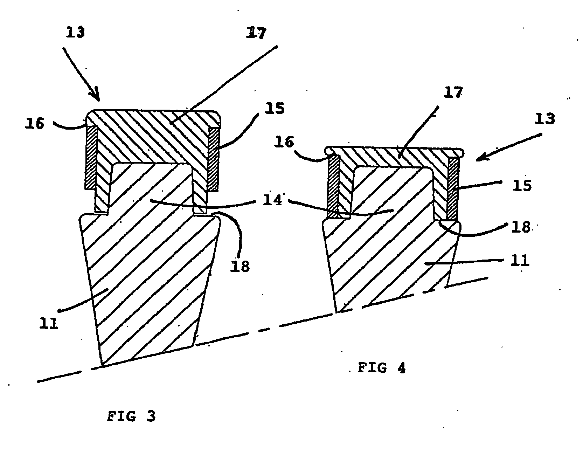

La pièce tampon 17 en plastique de la tête de frappe 13 est entourée extérieurement par une bague 15 métallique annulaire servant à la fois de frette et d'indicateur d'usure. La bague 15 est emmanchée sous un épaulement 16 de la pièce tampon 17, et recouvre au moins 60% de la longueur axiale de la tête de frappe 13 avant utilisation (figure 3).

La hauteur de l'embout 14 fixe du corps 11 métallique reste toujours inférieure à la longueur axiale de la pièce tampon 17 avant et après usure de cette dernière (figures 3 et 4).

Le bout de la pièce tampon 17 en plastique prend appui en permanence sur une butée 18 annulaire du corps 11, ladite butée 18 étant agencée au niveau de l'interface avec l'embout 14. La largeur de cette butée 18 est légèrement supérieure au diamètre extérieur de la bague 15. Dans l'état d'usure maximum de la pièce tampon 17, la bague 15 métallique prend également appui sur la butée 18 (figure 4).

On note sur la figure 3 que la pièce tampon 17 est agencée entre la bague 15 et l'embout 14, tous deux étant en matériau métallique. La bague 15 recouvre à la fois la pièce tampon 17 sur plus de 60% de sa longueur axiale, et également l'embout 14. La matière plastique est ainsi coincée dans la direction radiale entre la bague 15 et l'embout 14, contribuant à renforcer la résistance de la matière dans l'état de compression. Plus on tape sur la tête de frappe 13, plus la matière plastique de la pièce tampon 17 est comprimée entre la bague 15 et l'embout 14.

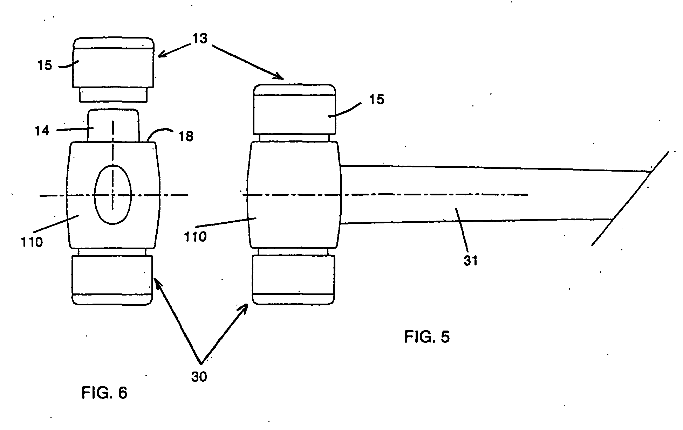

Sur les figures 5 et 6, l'outil est constitué par une masse 30 ayant un manche 31 et un corps 110 métallique équipé d'un embout 14 tronconique et d'une tête de frappe 13 interchangeable, qui ont des structures identiques à celles du coin 10 des figures 1 à 4.

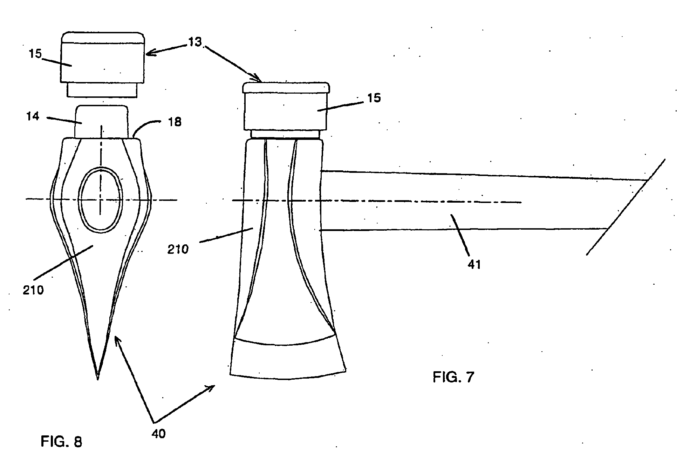

Selon les figures 7 et 8, l'outil peut aussi être un merlin ayant un manche 41 et un corps 210 métallique équipé d'un embout 14 tronconique pour la réception de la tête de frappe 13 interchangeable.

## Revendications

1. Outil comprenant un corps (11, 110, 210), et une tête de frappe (13) réalisée en un matériau de dureté inférieure à l'acier, la tête de frappe (13) étant formée par une pièce tampon (17) interchangeable, rapportée sur un embout (14) tronconique faisant saillie du corps (11, 110, 210), et entourée extérieurement par une bague (15) métallique annulaire servant de frette et d'indicateur d'usure, ladite bague présentant une longueur axiale inférieure à celle de la tête de frappe, la différence de longueur correspondant à l'intervalle d'usure maximum de ladite tête,
**caractérisé en ce que** le corps (11,110,210) est métallique en acier, la pièce tampon (17) est n matière plastique et est coincée entre la bague (15) et l'embout (14) tronconique, tous deux métalliques, ladite bague (15) étant logée sous un épaulement (16) de la tête de frappe (13), pour se déplacer sur la pièce tampon (17) en fonction de l'usure.

2. Outil selon la revendication 1, **caractérisé en ce que** la bague (15) métallique recouvre au moins 60% de la longueur axiale de la tête de frappe (13) avant utilisation.

3. Outil selon la revendication 1 ou 2, **caractérisé en ce que** la longueur axiale de la bague (15) métallique est supérieure à la hauteur de l'embout (14) tronconique du corps (11).

4. Outil selon l'une des revendications précédentes, **caractérisé en ce que** le corps (11, 110, 210) est équipé d'une butée (18) située au niveau de l'interface avec l'embout (14) pour servir d'organe d'appui à la pièce tampon (17), ainsi qu'à la bague (15) métallique lorsque ladite pièce tampon se trouve dans l'état d'usure maximum.

5. Outil selon l'une des revendications précédentes, **caractérisé en ce que** le corps est constitué par un coin (10) pour fendre du bois, la tête de frappe (13) étant agencée à l'opposé de l'arête de coupe (12).

6. Outil selon l'une des revendications 1 à 4, **caractérisé en ce que** le corps est constitué par un merlin (40), ou une masse (30).

## Claims

1. Tool comprising a body (11, 110, 210) and an impact head (13) made from a material having a lesser hardness than steel, where the impact head (13) is formed by an exchangeable buffer piece (17) mounted on a conical end (14) protruding from the body (11, 110, 210), and externally surrounded by a circumambient metal ring collar (15) serving as a clamp and wear indicator, which ring collar has an axial length inferior to that of the impact head, length difference corresponding to the maximum wear interval of said head, **characterized in that** the body (11, 110, 210) is metal made from steel, the buffer piece made of plastic and stuck between the ring collar (15) and the conical end (14), both of them being made of metal, which ring collar (15) being located under a shoulder (16) of the impact head (13) to move on the buffer piece (17) depending on wear.

2. Tool as claimed in claim 1, **characterized in that** the metal ring collar (15) covers at least 60 % of the axial length of the impact head (13) prior to use.

3. Tool as claimed in claim 1 or 2, **characterized in that** the axial length of the metal ring collar (15) exceeds the height of the conical end (14) of the body (11).

4. Tool as claimed in one of the preceding claims, **characterized in that** the body (11, 110, 210) is equipped with an end stop (18) placed at the interface area with the end (14) to serve as a supporting element to the buffer piece (17) as well as to the metal ring collar (15) when said buffer piece is in its maximum wear condition.

5. Tool as claimed in one of the preceding claims, **characterized in that** the body consists of a wedge (10) for wood-splitting and the impact head (13) is arranged opposite to the cutting edge (12).

6. Tool as claimed in one of the preceding claims, **characterized in that** the body is formed by a wedge axe (40) or a hammer (30).

## Patentansprüche

1. Werkzeug mit einem Körper (11, 110, 210) und einem Stoßkopf (13), der aus einem Material gefertigt ist, dessen Härte geringer ist als die von Stahl, wobei der Stoßkopf (13) von einem austauschbaren Pufferstück (17) gebildet wird, das an einem kegelstumpfförmigen Ansatzstück (14) angebracht ist, das aus dem Körper (11, 110, 210) heraussteht, und außen von einem umlaufenden metallischen Ring (15) umgeben ist, der als Zwinge und Verschleißanzeige dient, welcher Ring eine geringere Axiallänge als der Stoßkopf aufweist, wobei der Längenunterschied der maximalen Abnutzungsstrecke des Kopfes entspricht, **dadurch gekennzeichnet, dass** der Körper (11, 110, 210) metallisch und aus Stahl ist, wobei das Pufferstück aus Kunststoff und zwischen dem Ring (15) und dem kegelstumpfförmigen Ansatzstück (14) eingeklemmt ist, die beide aus Metall bestehen, und der Ring (15) unter einem Vorsprung (16) des Stoßkopfs (13) angeordnet ist, sodass er sich auf dem Pufferstück (17) je nach Abnutzung bewegen kann.

2. Werkzeug nach Anspruch 1, **dadurch gekennzeichnet, dass** der Metallring (15) vor der Benutzung mindestens 60 % der Axiallänge des Stoßkopfs (13) bedeckt.

3. Werkzeug nach Anspruch 1 oder 2, **dadurch gekennzeichnet, dass** die Axiallänge des Metallrings (15) die Höhe des kegelstumpfförmigen Ansatzstücks (14) des Körpers (11) übersteigt.

4. Werkzeug nach einem der vorstehenden Ansprüche, **dadurch gekennzeichnet, dass** der Körper (11, 110, 210) mit einem Anschlag (18) versehen ist, der sich in Höhe der gemeinsamen Grenzfläche mit dem Ansatzstück (14) befindet, um dem Pufferstück (17) als Auflageelement zu dienen, ebenso wie dem Metallring (15), wenn sich das Pufferstück im maximalen Verschleißzustand befindet.

5. Werkzeug nach einem der vorstehenden Ansprüche, **dadurch gekennzeichnet, dass** der Körper von einem Keil (10) zum Spalten von Holz gebildet wird, wobei der Stoßkopf (13) am entgegengesetzten Ende der Schnittkante (12) angeordnet ist.

6. Werkzeug nach einem der Ansprüche 1 bis 4, **dadurch gekennzeichnet, dass** der Körper von einer Spaltaxt (40) oder einem Hammer (30) gebildet wird.
